# EUROPEAN PATENT SPECIFICATION

(11) **EP 1 559 616 B1**
(45) Date of publication and mention of the grant of the patent: **23.05.2007**
(21) Application number: 05075096.7
(22) Date of filing: 12.01.2005
(51) Int. Cl.: B60R 21/01, B60R 16/02

(54) **Vehicle rollover detection using dual-axis acceleration sensing**
Vorrichtung zur Erkennung eines Fahrzeugüberschlags durch Messung der Beschleunigung entlang zwei Richtungen
Dispositif de détection de retournement de véhicule par mesure de l'accélération selon deux axes

(30) Priority: 29.01.2004 US 767810
(43) Date of publication of application: 03.08.2005
(73) Proprietor: Delphi Technologies, Inc., Troy, MI 48007 (US)
(72) Inventor: Wallner, Edward J., Westfield, IN 46032 (US)
(74) Representative: Denton, Michael John

(56) References cited:
- EP-A- 1 227 010
- US-A1- 2003 093 201

## Description

### Technical Field

The present invention generally relates to rollover sensing and, more particularly to vehicle rollover sensing employing sating (arming) logic for detecting a potential rollover condition of the vehicle, as disclosed in EP-A-1227010 A2 and the preamble of Claims 1 and 9.

### Background of the Invention

Automotive vehicles are increasingly equipped with on-board restraint devices that deploy in the event that the vehicle rolls over in an attempt to provide added protection to occupants of the vehicle. For example, a pop-up roll bar can be deployed to extend vertically outward to increase the height of support provided by the roll bar, upon detecting an anticipated vehicle rollover condition. Additionally, many vehicles are typically equipped with multiple air bags, side curtains, and seatbelt pretensioners. These and other restraint devices require timely deployment to mitigate adverse effects to occupants in the vehicle. To achieve timely deployment of restraint devices, the static and/or dynamic conditions of the vehicle generally must be monitored and a decision must be made to determine whether a vehicle rollover is anticipated.

Various single sensor and multiple sensor modules have been employed in vehicles to sense the static and dynamic conditions of the vehicle. For example, tilt switches, tilt sensors, angular rate sensors, and accelerometers have been employed. One sophisticated rollover sensing approach employs up to six sensors including three accelerometers and three angular rate sensors (gyros) generating sensed signals. The sensed signals are processed via an embedded microprocessor, which further discriminates deploy-desired events from non-deploy events. The sophisticated multiple sensor techniques generally employ primary discrimination algorithms implemented in a controller to process the sensed signals and determine the potential for a vehicle overturn condition.

In addition to employing primary rollover discrimination logic, some rollover detection approaches employ safing logic, also referred to as roll arming logic, which generates a safing (roll arming) signal that serves as a redundancy check prior to deploying restraint devices during a potential rollover event. The safing (roll arming) signal is typically logically ANDed with a rollover discrimination signal, to generate a rollover deployment output signal. One example of a vehicle rollover module employing roll arming (safing) control logic is disclosed in U.S. Patent No. 6,535,800, which is hereby incorporated herein by reference. The aforementioned roll arming (safing) control logic processes angular rate signals generated by a pair of angular rate sensors.

While the aforementioned roll arming (sating) control logic approach is well suited for vehicle rollover detection and restraint device deployment, some drawbacks may exist in that many angular rate sensors typically have a non-zero time-varying output. The resultant bias may cause a significant error in the integrated roll angle. Additional circuitry may be required to minimize the error, which adds to the size and cost of the module.

It is therefore desirable to provide for an accurate and timely responsive rollover safing apparatus that reduces or eliminates drawbacks of conventional approaches. In particular, it is desirable to provide for a cost-effective and accurate rollover safing apparatus that minimizes the probability of inadvertent or unwanted deployment activation with a rollover detection apparatus.

### Summary of the Invention

In accordance with the teachings of the present invention, a ollover sensing apparatus and method having respectively the features of claims 1 and 9, are provided for generating a safing signal for use in vehicle rollover detection. The rollover sensing apparatus includes an accelerometer located on a vehicle and oriented in a first axis at an angle offset from the longitudinal axis and lateral axis of the vehicle. The accelerometer senses a longitudinal component of acceleration of the vehicle and a lateral component of acceleration of the vehicle. The apparatus further includes control logic for receiving the sensed acceleration signal and generating a sating signal as a function of at least one of the longitudinal and lateral components of acceleration.

According to another aspect of the present invention, a rollover sensing apparatus is provided for detecting an anticipated overturn condition of a vehicle. The apparatus includes a sensor for detecting a vehicle roll characteristic, and rollover discrimination logic for generating a rollover discrimination signal. The apparatus also includes an accelerometer located on the vehicle and oriented in a first axis at an angle offset from the longitudinal axis and lateral axis of the vehicle. The accelerometer senses a longitudinal component of acceleration of the vehicle and a lateral component of acceleration of the vehicle. According to one embodiment, the accelerometer is implemented with a dual-axis acceleration sensor having first and second acceleration sensors angularly offset from one another. The apparatus includes safing logic for processing the sensed acceleration signal and generating a safing signal as a function of at least one of the longitudinal and lateral acceleration components. The apparatus further includes control logic for processing the discrimination signal and safing signal and generating a vehicle rollover output signal.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a block diagram of a vehicle equipped with a vehicle rollover sensing apparatus for detecting rollover of the vehicle according to the present invention;
FIG. 2 is a block and circuit diagram illustrating the rollover control logic including safing logic according to the present invention; and
FIG. 3 is a flow diagram illustrating a method of generating a safing signal with the rollover safing logic according to the present invention.

### Description of the Preferred Embodiment

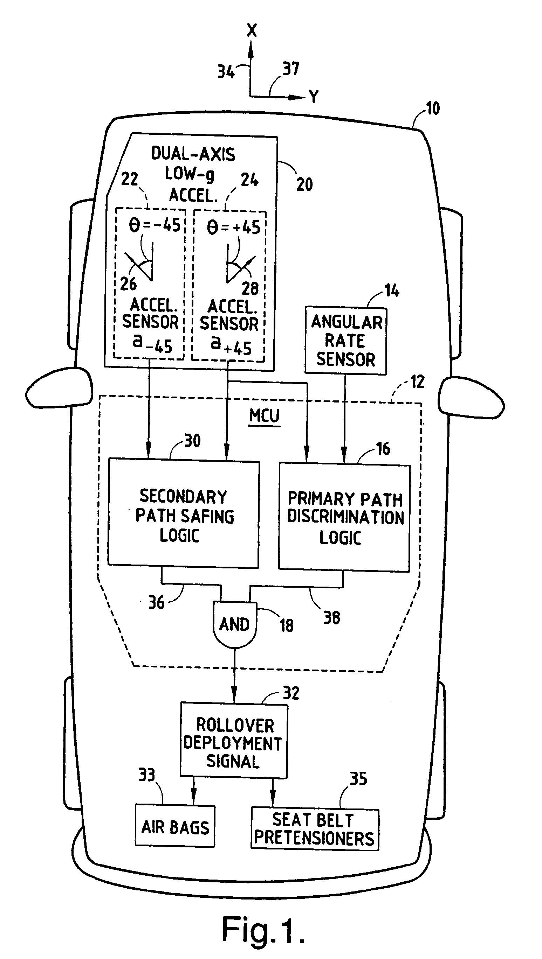

Referring to FIG. 1, a vehicle 10 is generally shown equipped with a rollover sensing apparatus for detecting an anticipated overturn condition, such as a rollover event of the vehicle 10. The rollover sensing apparatus of the present invention may be mounted as a module on the automotive vehicle 10 and detects, in advance, an impending rollover event (condition) of the vehicle 10. A vehicle rollover condition, as explained herein in connection with the present invention may include side-to-side rotation of the vehicle 10 about a longitudinal axis 34 (shown as the X-axis) of the vehicle 10, commonly referred to as "vehicle rollover," or back-to-front rotation of the vehicle 10 about the vehicle lateral axis 37 (shown as the Y-axis which is orthogonal to the longitudinal axis 34), commonly referred to as a "vehicle pitchover," or a combination of rollover and pitchover. For purposes of describing the rollover sensing of the present invention, the term "rollover" is generally used to refer to either a rollover condition or a pitchover condition.

The rollover sensing apparatus is designed to be located on the automotive vehicle 10 to sense vehicle dynamics, particularly longitudinal and lateral components of accelerations and one or more further vehicle roll characteristics, such as an angular rate (velocity) of the vehicle 10, according to one example. Included in the rollover sensing apparatus is a primary sensor, shown as an angular rate sensor 14, which may include a roll rate sensor for sensing an angular roll rate about the longitudinal axis 34 of the vehicle 10, a pitch rate sensor for sensing angular pitch about the lateral axis 37 of the vehicle 10, or both roll and pitch rate sensors.

The vehicle rollover sensing apparatus, according to one embodiment of the present invention, employs a dual-axis low-g accelerometer 20. Accelerometer 20 includes a first acceleration sensor 22 oriented in a first axis 26 at an angle θ offset from the longitudinal axis 34 and lateral axis 37 of vehicle 10. Sensor 22 is shown oriented at angle θ = -45 degrees from the longitudinal axis 34 and generates a first linear acceleration signal a₋₄₅ . Additionally, the accelerometer 20 includes a second acceleration sensor 24 oriented in a second axis 28 at angle θ offset from the longitudinal axis 34 and lateral axis 37 of the vehicle 10. Sensor 24 is shown oriented at angle θ = +45 degrees from longitudinal axis 34 and generates a second linear acceleration signal a₊₄₅ Thus, in the embodiment shown sensors 22 and 24 are arranged orthogonal to each other offset from the longitudinal axis 34 and lateral axis 37 of the vehicle 10.

It should be appreciated that the dual-axis low-g accelerometer 20 advantageously senses linear acceleration about the first and second axes 26 and 28. By orienting each of the sensors 22 and 24 at an angle θ such that first and second axes 26 and 28 are offset from the longitudinal axis 34 and lateral axis 37 of the vehicle 10, each of the acceleration sensors 22 and 24 provides longitudinal and lateral components a_{X} and a_{Y} of acceleration. According to one example, the accelerometer 20 may include a dual-axis ±2 g linear accelerometer such as Model No. ADXL202 or Model No. ADXL203, both commercially available from Analog Devices, Inc.

The vehicle rollover sensing apparatus includes a controller, shown as microprocessor control unit (MCU) 12, having a microprocessor and memory. The vehicle rollover sensing apparatus further includes primary path discrimination logic 16, secondary path safing logic 30, and deployment control logic 18 in the form of a logic AND gate. The controller 12 processes the primary path discrimination logic 16, secondary path safing logic 30, and deployment control logic 18.

The primary path discrimination logic 16 may include any of a number of discrimination logic routines for processing one or more sensed roll-related characteristics of the vehicle 10 and determining a primary rollover discrimination signal 38. One example of primary path discrimination logic 16 is disclosed in U.S. Patent No. 6,542,792, assigned to the Assignee of the present application, the entire disclosure of which is hereby incorporated herein by reference. In the embodiment shown, the primary path discrimination logic 16 processes the angular rate sensor 14 using an integrator and control logic to generate a discrimination signal 38 for use in determining the vehicle rollover deployment signal 32.

The vehicle rollover detection of the present invention employs secondary path safing logic 30 for generating a sating signal 36, which is logically ANDed with the discrimination signal 38 to generate the rollover deployment signal 32. The safing signal 36 provides a redundancy check prior to deploying one or more restraint devices, such as air bags 33 and seatbelt pretensioners 35. It should be appreciated that any of a number of restraint devices, in addition to the air bags 33 and seatbelt pretensioners 35, may be deployed in response to the rollover deployment signal 32.

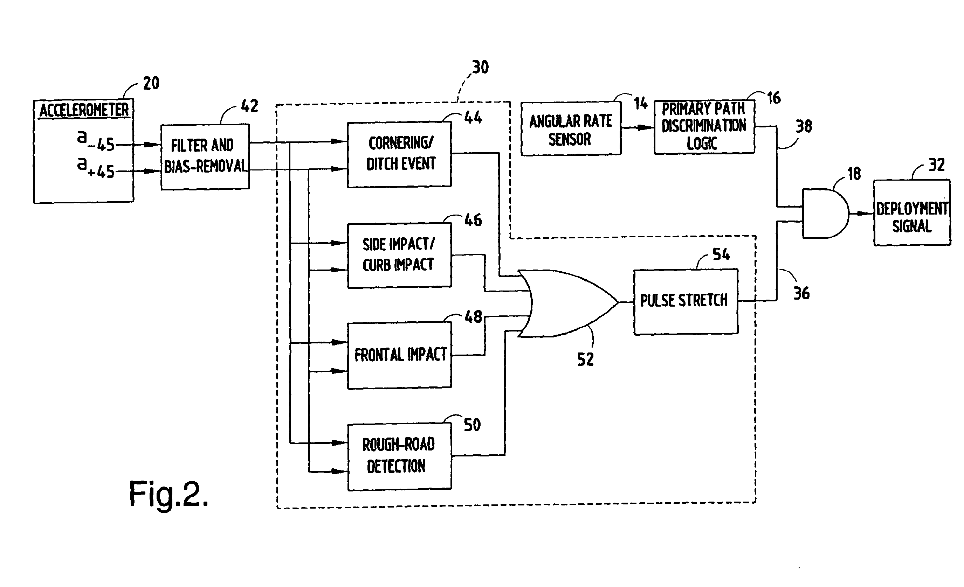

Referring to FIG. 2, the sensed acceleration signals a₋₄₅ and a₊₄₅ generated by sensors 22 and 24 of accelerometer 20 are processed by filter and bias-removal logic 42. The filter and bias-removal logic 42 removes unwanted bias and noise associated with the individual sensed acceleration signals a₋₄₅ and a₊₄₅ . This may include removing constant and slowly-varying offset bias.

The secondary path safing logic 30 receives the filtered and bias-removed acceleration signals a₋₄₅ and a₊₄₅, processes the longitudinal and lateral components of acceleration a_{X} and a_{Y}, and generates the safing signal 36. In particular, the safing logic 30 compares the longitudinal and lateral components of acceleration from one or both of acceleration signals a ₋₄₅ and a₊₄₅ to predetermined threshold values. The threshold values are threshold indicators of certain events.

The safing logic 30 includes logic for detecting several vehicle driving events including cornering/ditch event 44, side impact/curb event 46, frontal impact event 48, and rough road event detection 50. Safing logic 30 detects the presence of one or more of events 44 through 50 by comparing select longitudinal and lateral components of acceleration to the predetermined threshold values. In response to detecting the presence of any of the events 44 through 50, an output signal is provided as an input to the logic OR gate 52. Any one of the events 44 through 50 being detected generates an output via logic OR gate 52 to a pulse stretch 54. The pulse stretch 54 latches the output of the logic OR gate 52 for a set time period to set the safing signal 36 for the duration of the time period such that the detection of the discriminating signal 38 during that time period results in control logic AND gate 18 generating a rollover deployment signal 32.

The safing logic 30 is implemented as software, processed by a microprocessor and memory in the controller 12 according to the embodiment shown and described herein. However, it should be appreciated that safing logic 30 may be implemented by analog and/or other digital circuitry.

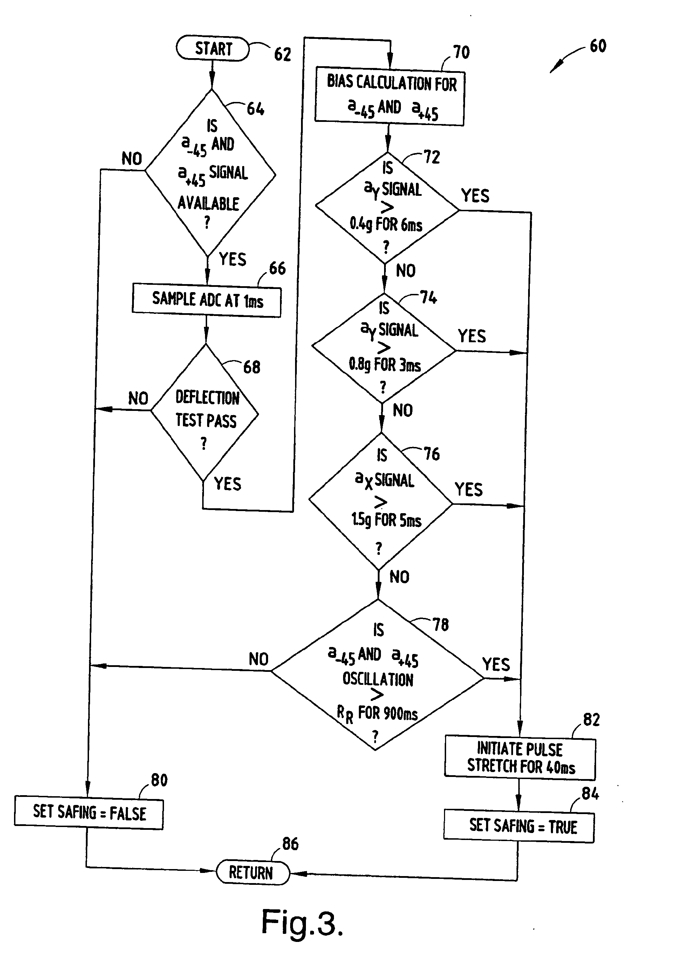

A method 60 of implementing the safing logic 30 is illustrated in FIG. 3, according to one embodiment. Sating logic method 60 begins at step 62 and proceeds to decision step 64 to determine if the first and second acceleration signals a ₋₄₅ and a ₊₄₅ are both available. If both acceleration signals a₋₄₅ and a ₊₄₅ are not available, method 60 sets a sating flag to false in step 80, before returning in step 86. Provided both acceleration signals a₋₄₅ and a ₊₄₅ are available, method 60 proceeds to step 66 to sample the analog-to-digital converted (ADC) signals at one millisecond (1 ms) intervals. Next, decision step 68 checks for whether a deflection self-test is passed and, if not, sets the sating flag to false in step 80, before returning in step 86 to repeat the method 60. If the deflection self-test has passed, routine 60 proceeds to perform bias calculation for acceleration signals a₋₄₅ and a ₊₄₅ in step 70.

Following the bias calculation step, method 60 checks for a cornering/ditch event in decision step 72. This includes comparing the lateral component of acceleration a_{Y} from one or both of acceleration signals a₋₄₅ and a₊₄₅ to a threshold value, and determining if the lateral component of acceleration a_{Y} is greater than a predetermined threshold value, such as 0.4 g, for a time interval of 6 milliseconds. If a cornering/ditch event is detected, method 60 sets the pulse stretch for 40 milliseconds in step 82 and then sets a safing flag to true in step 84. The setting of the safing flag to true generates the safing signal which allows for deployment of restraint devices, provided the primary rollover discrimination signal is also present at some point during the pulse stretch time period. The safing flag returns to false after the 40 millisecond pulse stretch has expired, and the routine returns in step 86.

Next, method 60 checks for a side/curb impact in decision step 74. Decision step 74 includes comparing the lateral component of acceleration a_{Y} from one or both of signals a₋₄₅ and a₊₄₅ to a threshold value, and determining if the lateral component of acceleration a_{Y} is greater than a predetermined value, such as 0.8 g, for a time interval of 3 milliseconds. If a side/curb impact event is detected, method 60 sets the pulse stretch for 40 milliseconds in step 82, and then sets a safing flag to true in step 84 which allows for deployment of restraint devices, provided the primary rollover discrimination signal is also present at some point during the pulse stretch time period.

Method 60 also checks for a frontal impact event (front collision) in decision step 76. Decision step 76 compares the longitudinal component of acceleration a_{X} from one or both of signals a₋₄₅ and a₊₄₅ to a threshold value and determines if the longitudinal component of acceleration a_{X} is greater than a predetermined value, such as 1.5 g, for a 5 millisecond time period. If a frontal impact is detected, method 60 proceeds to step 82 to set the pulse stretch to 40 milliseconds and then to step 84 to set the safing flag equal to true to generate the safing signal.

Method 60 further checks for a rough road condition in decision step 78. Decision step 78 includes comparing one or both of first and second acceleration signals a₋₄₅ and a₊₄₅ from sensors 22 and 24 and determining whether the first and second acceleration signals a₋₄₅ and a₊₄₅ provides an oscillation in the form of a change in acceleration greater than a value R_{R} for a 900 millisecond time period. If a rough road condition is detected, method 60 proceeds to set the pulse stretch equal to 40 milliseconds in step 82 and then sets the safing flag equal to true in step 84 to generate the safing signal, before returning at step 86.

Accordingly, sating logic method 60 checks for the presence of any of several vehicle driving events including a cornering/ditch event, side impact/curb event, frontal impact, and rough road detection, and generates a safing signal in response to detecting any one or more of these events. This enables the vehicle rollover detection apparatus to deploy restraint devices provided the sating signal and primary vehicle rollover discrimination signal are both present.

## Claims

1. A vehicle rollover sensing apparatus for generating a safing signal, said rollover sensing apparatus comprising:
an accelerometer (20) located on a vehicle (10) and comprising a first acceleration sensor (22) oriented in a first axis (26) at an angle (θ) offset from the longitudinal axis (34) and lateral axis (37) of the vehicle (10), said accelerometer (20) sensing a longitudinal component of acceleration of the vehicle (10) and a lateral component of acceleration of the vehicle (10); and
control logic (30) for receiving the sensed acceleration signal and generating a safing signal as a function of at least one of the longitudinal and lateral components of acceleration;
**characterised in that** the accelerometer (20) further comprises a second acceleration sensor (24) located on the vehicle (10) and oriented in a second axis (28) at an angle (θ) offset from the longitudinal axis (34) and lateral axis (37) of the vehicle (10), said second acceleration sensor (24) sensing a longitudinal component of acceleration of the vehicle (10) and a lateral component of acceleration of the vehicle (10).

2. The rollover sensing apparatus as defined in claim 1, wherein the accelerometer (20) comprises a dual-axis accelerometer providing the first and second acceleration sensors (22 and 24) for providing the first and second acceleration signals.

3. The vehicle rollover apparatus as defined in claim 2, wherein the dual-axis accelerometer (20) comprises a low-g accelerometer.

4. The rollover sensing apparatus as defined in claim 1, wherein the first and second accelerometer sensors (22 and 24) are oriented such that the first axis (26) is substantially orthogonal to the second axis (28).

5. The rollover sensing apparatus as defined in claim 4, wherein the first axis (26) is oriented at an angle (θ) approximately 45 degrees relative to the longitudinal axis (34) of the vehicle (10), and a second axis (28) is oriented at an angle (θ) approximately 45 degrees relative to the longitudinal axis (34) of the vehicle (10).

6. The rollover sensing apparatus as defined in claim 1, wherein the safing signal (36) is processed with a rollover discrimination signal (38) to generate a vehicle overturn condition signal (32) as a function of the rollover discrimination signal (38) and the safing signal (36).

7. The rollover sensing apparatus as defined in claim 6, wherein the overturn condition is a vehicle rollover about the longitudinal axis (34) of the vehicle (10).

8. The rollover sensing apparatus as defined in claim 1, wherein said roll arming logic (30) compares at least one of the longitudinal and lateral components of acceleration to a threshold value.

9. A method (60) of generating a safing signal (36) for use in detecting a vehicle rollover, said method comprising the steps of:
sensing (64) longitudinal and lateral components of acceleration (aₓ and a_{y}) of a vehicle (10) via a first acceleration sensor (22) located on the vehicle (10) and oriented in a first axis (26) at an angle (θ) offset from the longitudinal axis (34) and lateral axis (37) of the vehicle (10); and
generating (72-78) a safing signal (36) as a function of at least one of the sensed longitudinal and lateral components (aₓ and a_{y}) of acceleration;
**characterised by** the step of (64) sensing longitudinal and lateral components of acceleration of the vehicle via a second acceleration sensor (24) located on the vehicle (10) and oriented in a second axis (28) at an angle (θ) offset from the longitudinal axis (34) and lateral axis (37) of the vehicle (10), wherein the safing signal (36) is generated as a function of at least one of the sensed longitudinal and lateral components (aₓ and a_{y}) of acceleration generated by at least one of the first and second acceleration sensors (22 and 24).

10. The method as defined in claim 9, wherein the steps of sensing (64) longitudinal and lateral acceleration (aₓ and a_{y}) of the vehicle (10) via the first and second acceleration sensors (22 and 24) comprises sensing longitudinal and lateral components of acceleration via a dual-axis accelerometer (20).

11. The method as defined in claim 9, wherein the first and second acceleration sensors (22 and 24) are oriented substantially orthogonal to each other.

12. The method as defined in claim 9 further comprising the step of determining (18) a vehicle rollover event as a function of the safing signal.

13. The method as defined in claim 9 further comprising the step of processing (18) the safing signal (36) with a rollover discrimination signal (38) to generate a vehicle overturn condition (32) deployment signal as a function of the rollover discrimination signal (38) and the safing signal (36).

14. The method as defined in claim 9, wherein the overturn condition is a vehicle rollover about the longitudinal axis (34) of the vehicle (10).

15. The method as defined in claim 9 further comprising the step of comparing (72-78) at least one of the longitudinal and lateral components (aₓ and a_{y}) of acceleration to a threshold value to determine the safing signal (36).

## Patentansprüche

1. Fahrzeugüberschlagerfassungsvorrichtung zum Erzeugen eines Sicherungssignals, wobei die Überschlagerfassungseinrichtung folgendes aufweist:
einen Beschleunigungsmesser (20), der an einem Fahrzeug (10) angeordnet ist und einen ersten Beschleunigungssensor (22) aufweist, der in einer ersten Achse (26) in einem Winkel (θ) orientiert ist, der von der Längsachse (34) und der Querachse (37) des Fahrzeugs versetzt ist, wobei der Beschleunigungsmesser (20) eine Längsbeschleunigungskomponente des Fahrzeugs (10) und eine Querbeschleunigungskomponente des Fahrzeugs (10) erfasst; und Steuerlogik (30) zum Empfangen des erfassten Beschleunigungssignals und Erzeugen eines Sicherungssignals als eine Funktion wenigstens der Längsbeschleunigungskomponente oder der Querbeschleunigungskomponente; **dadurch gekennzeichnet, dass** der Beschleunigungsmesser (20) ferner einen zweiten Beschleunigungssensor (24) aufweist, der an dem Fahrzeug (10) angeordnet ist und in einer zweiten Achse (28) in einem Winkel (θ) orientiert ist, der von der Längsachse (34) und der Querachse (37) des Fahrzeugs (10) versetzt ist, wobei der zweite Beschleunigungssensor (24) eine Längsbeschleunigungskomponente des Fahrzeugs (10) und eine Querbeschleunigungskomponente des Fahrzeugs (10) erfasst.

2. Überschlagerfassungsvorrichtung nach Anspruch 1, bei welcher der Beschleunigungsmesser (20) einen Zweiachsenbeschleunigungsmesser aufweist, der den ersten und den zweiten Beschleunigungssensor (22 und 24) zum Liefern des ersten und des zweiten Beschleunigungssignals vorsieht.

3. Fahrzeugüberschlagerfassungsvorrichtung nach Anspruch 2, bei welcher der Zweiachsenbeschleunigungsmesser (20) einen Nieder-G-Beschleunigungsmesser aufweist.

4. Überschlagerfassungsvorrichtung nach Anspruch 1, bei welcher der erste und der zweite Beschleunigungsmessersensor (22 und 24) derart orientiert sind, dass die erste Achse (26) im wesentlichen orthogonal zu der zweiten Achse (28) ist.

5. Überschlagerfassungsvorrichtung nach Anspruch 4, bei welcher die erste Achse (26) in einem Winkel (θ) von etwa 45 Grad relativ zu der Längsachse (34) des Fahrzeugs (10) orientiert ist und eine zweite Achse (28) in einem Winkel (θ) von etwa 45 Grad relativ zu der Längsachse (34) des Fahrzeugs (10) orientiert ist.

6. Überschlagerfassungsvorrichtung nach Anspruch 1, bei welcher das Sicherungssignal (36) mit einem Überschlagdiskriminierungssignal (38) verarbeitet wird, um ein Fahrzeugüberrollbedingungssignal (32) als eine Funktion des Überschlagdiskriminierungssignals (38) und des Sicherungssignals (36) zu erzeugen.

7. Überschlagerfassungsvorrichtung nach Anspruch 6, bei welcher die Überrollbedingung ein Fahrzeugüberschlag um die Längsachse (34) des Fahrzeugs (10) ist.

8. Überschlagerfassungsvorrichtung nach Anspruch 1, bei welcher die Rollscharfstellungslogik (30) wenigstens eine der Längs- und Querbeschleunigungskomponenten mit einem Schwellenwert vergleicht.

9. Verfahren (60) zum Erzeugen eines Sicherungssignals (36) zur Verwendung beim Detektieren eines Fahrzeugüberschlags, wobei das Verfahren folgende Schritte umfasst:
Erfassen (64) von Längs- und Querbeschleunigungskomponenten (aₓ und a_{y}) eines Fahrzeugs (10) über einen ersten Beschleunigungssensor (22), der an dem Fahrzeug (10) angeordnet und in einer ersten Achse (26) in einem Winkel (θ) orientiert ist, der von der Längsachse (34) und der Querachse (37) des Fahrzeugs (10) versetzt ist; und
Erzeugen (72-78) eines Sicherungssignals (36) als eine Funktion wenigstens einer der erfassten Längs- und Querbeschleunigungskomponenten (aₓ und a_{y}); **gekennzeichnet durch** den Schritt (64) des Erfassens von Längs- und Querbeschleunigungskomponenten des Fahrzeugs über einen zweiten Beschleunigungssensor (24), der an dem Fahrzeug (10) angeordnet ist und in einer zweiten Achse (28) in einem Winkel (θ) orientiert ist, der von der Längsachse (34) und der Querachse (37) des Fahrzeugs (10) versetzt ist, wobei das Sicherungssignal (36) als eine Funktion wenigstens einer der erfassten Längs- und Querbeschleunigungskomponenten (aₓ und a_{y}) erzeugt wird, die von wenigstens einem der ersten und zweiten Beschleunigungssensoren (22 und 24) erzeugt werden.

10. Verfahren nach Anspruch 9, bei welchem die Schritte des Erfassens (64) der Längs- und Querbeschleunigung (aₓ und a_{y}) des Fahrzeugs (10) über den ersten und den zweiten Beschleunigungssensor (22 und 24) das Erfassen von Längs- und Querbeschleunigungskomponenten über einen Zweiachsenbeschleunigungsmesser (20) umfasst.

11. Verfahren nach Anspruch 9, bei welchem der erste und der zweite Beschleunigungssensor (22 und 24) im wesentlichen orthogonal zueinander orientiert sind.

12. Verfahren nach Anspruch 9, das ferner den Schritt des Bestimmens (18) eines Fahrzeugüberschlagereignisses als eine Funktion des Sicherungssignals umfasst.

13. Verfahren nach Anspruch 9, das ferner den Schritt des Verarbeitens (18) des Sicherungssignals (36) mit einem Überschlagdiskriminierungssignal (38) umfasst, um ein Fahrzeugüberrollbedingungseinsatzsignal (32) als eine Funktion des Überschlagdiskriminierungssignals (38) und des Sicherungssignals (36) zu erzeugen.

14. Verfahren nach Anspruch 9, bei welchem die Überrollbedingung ein Fahrzeugüberschlag um die Längsachse (34) des Fahrzeugs (10) ist.

15. Verfahren nach Anspruch 9, das ferner den Schritt des Vergleichens (72-78) wenigstens einer der Längs- und Querbeschleunigungskomponenten (aₓ und a_{y}) mit einem Schwellenwert umfasst, um das Sicherungssignal (36) zu bestimmen.

## Revendications

1. Appareil de détection de retournement de véhicule pour générer un signal de sécurité, ledit appareil de détection de retournement comprenant :
un accéléromètre (20) située sur un véhicule (10) et comprenant un premier capteur d'accélération (22) orienté selon un premier axe (26) décalé selon un angle par rapport à l'axe longitudinal (34 ) et un axe latéral (37) du véhicule (10), ledit accéléromètre (20) détectant une composante longitudinale d'accélération du véhicule (10) et une composante latérale d'accélération du véhicule (10) ; et
une logique de commande (30) pour recevoir le signal d'accélération détecté et générer un signal de sécurité comme une fonction d'au moins une des composantes latérale et longitudinale d'accélération,
**caractérisé en ce que** l'accéléromètre (20) comprend en outre un deuxième capteur d'accélération (24) situé sur le véhicule (10) et orienté selon un axe un deuxième axe (28) décalé selon un angle par rapport à l'axe longitudinal (34) et l'axe latéral (37) du véhicule (10), ledit capteur d'accélération deuxième (24) détectant une composante longitudinale d'accélération du véhicule (10) et une composante latérale d'accélération du véhicule (10).

2. Appareil de détection de retournement selon la revendication 1, dans lequel l'accéléromètre (20) comprend un accéléromètre à double axe fournissant les premier et deuxième capteurs d'accélération (22 et 24) pour fournir les premiers et deuxième signaux d'accélération.

3. Appareil de détection de retournement de véhicule selon la revendication 2, dans lequel l'accéléromètre à double axe (20) comprend un accéléromètre pour accélération faible.

4. Appareil de détection de retournement selon la revendication 1, dans lequel les premier et deuxième capteurs d'accéléromètre (22 et 24) sont orientés de sorte que le premier axe (26) est essentiellement orthogonal au deuxième axe (28).

5. Appareil de détection de retournement selon la revendication 4, dans lequel le premier axe (26) est orienté selon un angle (θ) approximativement de 45° par rapport à l'axe longitudinal (34) du véhicule (10), et un deuxième axe (28) est orienté selon un angle (θ) approximativement de 45° par rapport à l'axe longitudinal (34) du véhicule (10).

6. Appareil de détection de retournement selon la revendication de 1, dans lequel le signal de sécurité (36) est traité avec un signal de discrimination de retournement (38) pour générer un signal (32) de conditions de retournement du véhicule comme une fonction du signal de discrimination de retournement (38) et du signal de sécurité (36).

7. Appareil de détection de retournement selon la revendication 6, dans lequel la condition de retournement est un retournement de véhicule selon l'axe longitudinal (34) du véhicule (10).

8. Appareil de détection de retournement selon la revendication 1, dans lequel ladite logique (30) compare au moins une des composantes longitudinale et latérale d'accélération à une valeur seuil.

9. Procédé (60) de génération d'un signal de sécurité (36) pour une utilisation dans la détection d'un retournement de véhicule, ledit procédé comprenant les étapes de :
détection (64) de composantes longitudinale et latérale d'accélération (aₓ et a_{y}) d'un véhicule (10) par un capteur premier d'accélération (22) située sur le véhicule (10) et orienté selon un premier axe (26) décalé selon un angle (θ) par rapport à l'axe longitudinal (34) et l'axe latéral (37) du véhicule (10); et
génération (72-78) d'un signal de sécurité (36) comme une fonction d'au moins une des composantes longitudinale et latérale détectées (aₓ et a_{y}) d'accélération ;
**caractérisé par** l'étape (64) de détection des composantes longitudinale et latérale d'accélération du véhicule par un deuxième capteur d'accélération (24) située sur le véhicule (10) et orienté selon un deuxième axe (28) décalé selon un d'angle (θ) par rapport à l'axe longitudinal (34) et l'axe latéral (37) du véhicule (10), dans lequel le signal de sécurité (36) est généré comme une fonction d'au moins une des composantes longitudinale et latérale détectées (aₓ et a_{y}) d'accélération générée par au moins un des premier et deuxième détecteurs d'accélération (22 et 24).

10. Procédé selon la revendication 9, dans lequel les étapes de détection (64) d'accélération longitudinale et latérale (aₓ et a_{y}) du véhicule (10) par les premier et deuxième capteurs d'accélération (22 et 24) comprend la détection des composantes longitudinale et latérale d'accélération par un accéléromètre à double axe (20).

11. Procédé selon la revendication 9, dans lequel les premiers et deuxième capteurs d'accélération (22 et 24) sont orientés essentiellement orthogonalement l'un à l'autre.

12. Procédé selon la revendication 9 comprenant en outre l'étape de détermination (18) d'un événement de retournement de véhicule comme une fonction du signal de sécurité.

13. Procédé selon la revendication 9 comprenant en outre l'étape de traitement (18) du signal de sécurité (36) avec un signal de discrimination de retournement (38) pour générer un signal de déploiement de condition de retournement de véhicule (32) comme une fonction du signal de discrimination de retournement (38) et du signal de sécurité (36).

14. Procédé selon la revendication 9, dans lequel la condition de retournement est un retournement de véhicule selon l'axe longitudinal (34) du véhicule (10).

15. Procédé selon la revendication 9 comprenant en outre l'étape de comparaison (72 à 78) d'au moins l'une des composantes longitudinale et latérale (aₓ et a_{y}) d'accélération à une valeur seuil pour déterminer le signal de sécurité (36).
